# EUROPEAN PATENT SPECIFICATION

(11) **EP 1 855 500 B1**
(45) Date of publication and mention of the grant of the patent: **19.12.2012**
(21) Application number: 07009470.1
(22) Date of filing: 11.05.2007
(51) Int. Cl.: H04W 8/04

(54) **Roaming control device, mobile communication terminal, mobile communication system, and roaming control method**
Vorrichtung zur Steuerung der Erreichbarkeit, mobiles Kommunikationsendgerät, mobiles Kommunikationssystem und Verfahren zur Steuerung der Erreichbarkeit
Dispositif de contrôle d'itinérance, terminal de communication mobile, système de communication mobile et procédé de contrôle d'itinérance

(30) Priority: 11.05.2006 JP 2006132875
(43) Date of publication of application: 14.11.2007
(73) Proprietor: NTT DOCOMO, INC., Chiyoda-ku Tokyo 100-6150 (JP)
(72) Inventor: Igaue, Yoshio, Tokyo 100-6150 (JP); Tosaki, Takashi, Tokyo 100-6150 (JP)
(74) Representative: Viering, Jentschura & Partner

(56) References cited:
- EP-A- 1 463 366
- US-A1- 2003 003 933
- US-A1- 2005 271 021

## Description

### BACKGROUND OF THE INVENTION

### Field of the Invention

The present invention relates to a roaming control device for controlling the roaming of a mobile communication terminal, the mobile communication terminal, a mobile communication system that is constituted comprising the roaming control device and the mobile communication terminal, and a roaming control method.

### Related Background of the Invention

Roaming involves an attempt to receive the services of a service provider with whom the user has a contract by using a mobile communication network (called the 'roaming network' hereinbelow) of a service provider (supporting roaming) other than the service provider with whom the user has a contract even when the mobile communication terminal is outside the service provision area of the service provider with whom the user has a contract. More specifically, the mobile communication terminal is able to connect to the mobile communication network of the service provider with whom the user has a contract (called the 'home network' hereinbelow) via a roaming network by visiting (connecting to) the roaming network.

Conventionally, in cases where there are a plurality of roaming networks that the mobile communication terminal is able to visit, there are generally two different methods for selecting the visited roaming network, namely, auto-search in which the mobile communication terminal automatically selects a visited network and manual search, in which a visited network is selected manually by the user. Auto-search is a function whereby the mobile communication terminal automatically selects a visited network in accordance with the priority levels that are prescribed by 3GPP (3rd Generation Partnership Project) standard specifications. Here, it is possible to input the roaming network that the user would like to prioritize for a visit ahead of time. The content above appears in Japanese Application Laid Open No. 2005-57158 which is a Japanese Patent Kokai publication. The information that is input is registered in a module such as a USIM (Universal Subscriber Identity Module) of a mobile communication terminal, for example. Manual search is a function whereby the mobile communication terminal detects roaming networks that can be visited, and the user is able to freely select a roaming network from among the detected roaming networks.

By using these two different kinds of selection methods, the user is able to select a roaming network that more conforms to the requirements of the user in terms of fees and services and so forth. In cases where the user would like to visit a roaming network with lower communication fees, for example, the user is able to select the roaming network by means of a manual search. Further, in cases where the user would like to use a TV phone using the home network which is the roaming destination, a roaming network that allows a TV phone to be used is registered beforehand as a high priority roaming network and a TV phone can be used even in the case of a roaming connection by performing an auto search.

However, in the case of the above technology, in order to select a roaming network that more conforms to the needs of the user in terms of fees and services and so forth, it has been a requirement to examine the communication fees of and the services provided by the respective roaming networks beforehand. Further, the user is unrestricted in terms of being able to obtain, as the latest accurate information, the information required in order to select a roaming network that satisfies their requirements and, therefore, there are no restrictions on the user being able to set a suitable priority level.

The document US 2005/0271021 A1 discloses a method and system for controlling wireless communication between a mobile terminal and a plurality of wireless access points. Link status and quality data is determined about each communication link between the mobile terminal and each wireless access point that is currently detectable by the mobile terminal. A priority list of the detected wireless access points is also generated. Also determined are access point status and quality data about the wireless access points themselves and/or a network connecting them. This access point data may not be accessible to the mobile terminal. The access point data can also include status and/or quality of neighboring wireless access points that are near the detected wireless access points, but not yet detected by the mobile terminal. The link data, access point data and another ranking are used to select a best wireless access point with which the mobile terminal will communicate.

### SUMMARY OF THE INVENTION

The present invention provides a roaming control device according to claim 1, a mobile communication terminal according to independent claim 4, a mobile communication system according to independent claim 7, a roaming control method for a roaming control device according to independent claim 8, a roaming control method for a mobile communication terminal according to independent claim 9 and a roaming control method for a mobile communication system according to independent claim 10. Further embodiments are defined in the dependent claims.

The invention makes it possible for a mobile terminal to easily and reliably visit a roaming network that conforms to the requirements of the user during roaming.

### BRIEF DESCRIPTION OF THE DRAWINGS

Fig. 1 shows the constitution of a mobile communication system as well as an HLR and a mobile communication terminal that are contained in the mobile communication system according to an embodiment of the present invention;
Fig. 2 shows the hardware constitution of the HLR of the embodiment of the present invention;
Fig. 3 shows a table of a roaming network information database according to this embodiment;
Fig. 4 shows an example of information on the requirements with respect to roaming networks of the user of the mobile communication terminal according to this embodiment;
Fig. 5 shows the hardware constitution of the mobile communication terminal of the embodiment of the present invention;
   and
Fig. 6 is a sequence diagram showing processing (roaming control processing) that is executed by the mobile communication system (HLR and mobile communication terminal) of the embodiment of the present invention.

### DESCRIPTION Of THE PREFERRED EMBODIMENTS

Preferred embodiments of the roaming control device, mobile communication terminal, mobile communication system, and roaming control method of the present invention will be described in detail hereinbelow with reference to the drawings. The same symbols have been assigned to the same elements in the description of the drawings, whereby repetition is avoided in the description.

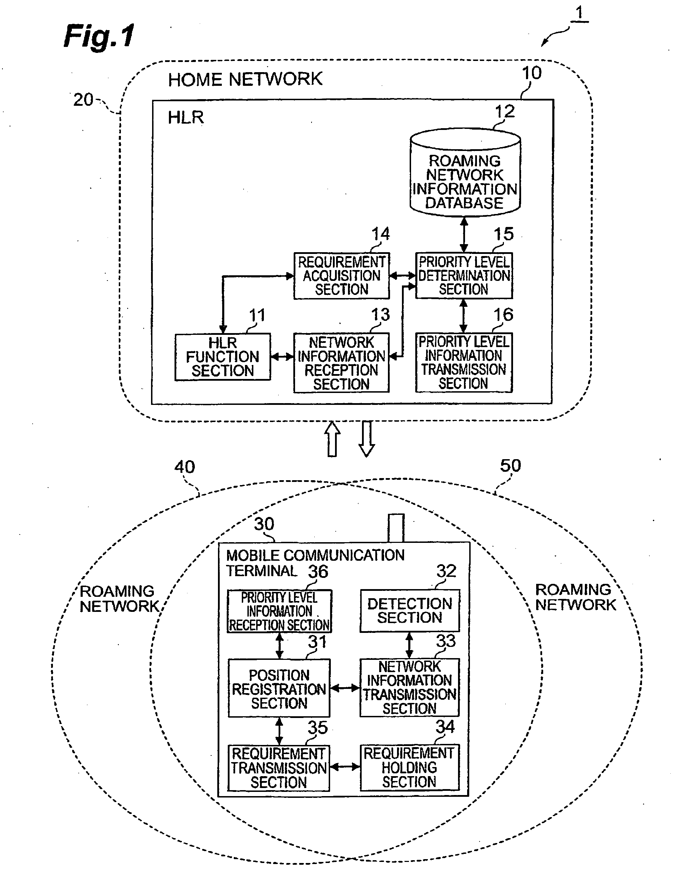

Fig. 1 shows a mobile communication system 1 according to this embodiment. The mobile communication system 1 comprises a mobile communication network 20 that is constituted comprising an HLR (Home Location Register) 10 which is also the roaming control device according to this embodiment and a mobile communication terminal 30 according to this embodiment. The mobile communication network 20 is a network that is provided by the service provider with whom the user of the mobile communication terminal 30 has a contract and the mobile communication terminal 30 is able to perform mobile communications by connecting to the mobile communication network 20 (the mobile communication network 20 is called the 'home network' 20 hereinbelow). Further, the mobile communication system 1 comprises mobile communication networks 40 and 50. The mobile communication networks 40 and 50 are networks that support roaming with the mobile communication network 20 and the mobile communication terminal 30 is able to visit the mobile communication networks 40 and 50 for roaming purposes (the mobile communication networks 40 and 50 are called 'roaming networks' hereinbelow). Further, although only two roaming networks are drawn in Fig. 1, two or more roaming networks may be contained in the mobile communication system 1. In addition, although not illustrated, the mobile communication networks 20, 40, and 50 comprise a device for providing the mobile communication terminal 30 with a mobile communication function, such as a switching system or base station.

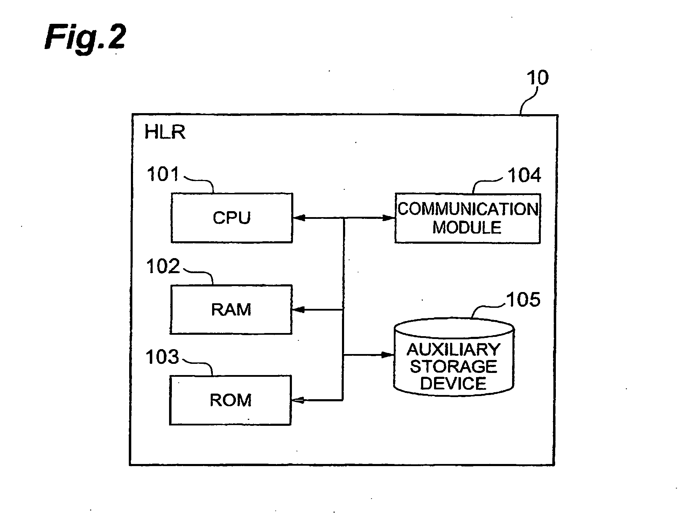

The HLR 10 is a device that manages information relating to the position registration of the mobile communication terminal 30. The HLR 10 is also a roaming control device for controlling the roaming of the mobile communication terminal 30. As shown in Fig.2, the HLR 10 is constituted as a computer that comprises hardware such as a CPU (Central Processing Unit) 101, a RAM (Random Access Memory) 102 which is a main storage device and a ROM (Read Only Memory) 103, a communication module 104 for performing communications, and an auxiliary storage device 105 such as a hard disk. As a result of the operation of such constituent elements, the original HLR functions and functions of the roaming control device (described subsequently) are demonstrated.

As shown in Fig. 1, the HLR 10 is constituted comprising an HLR function section 11, a roaming network information database 12, a network information reception section 13, a requirement acquisition section 14, a priority level determination section 15, and a priority level information transmission section 16.

The HLR function section 11 constitutes means for managing information relating to registration of the position of the mobile communication terminal 30, which is an original HLR function. In other words, the HLR function section 11 accepts registration of the positional information by receiving a position registration-related signal from the mobile communication terminal 30 and manages the information.

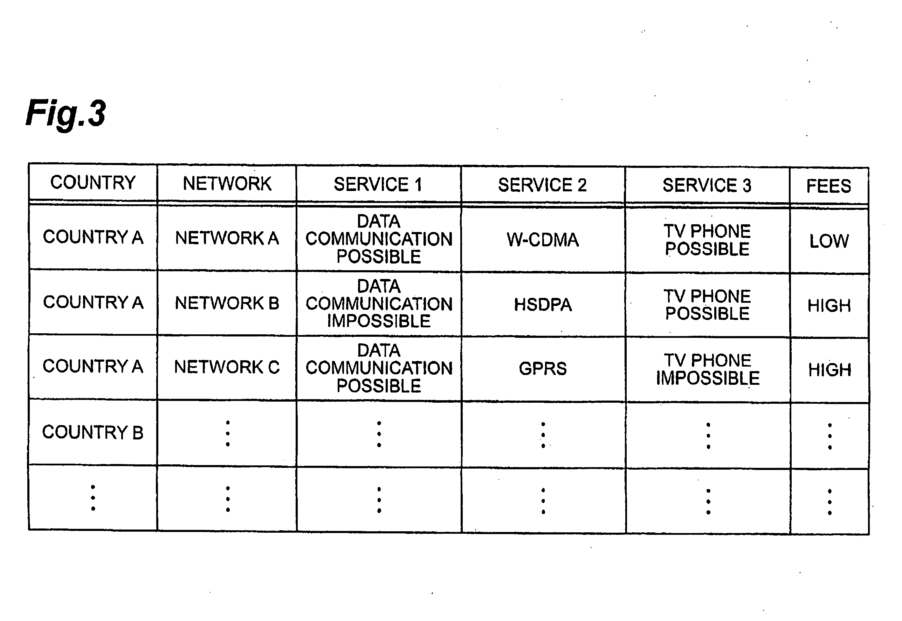

The roaming network information database 12 is a database for storing information relating to the roaming networks 40 and 50. Information relating to the roaming networks 40 and 50 is information on the conditions when using the roaming networks 40 and 50 such as the services and fees of the network, for example. This information is stored specifically in a table of the roaming network information database 12 as shown in Fig. 3. As shown in Fig. 3, the respective information associated with information specifying the roaming networks 40 and 50 (the 'network' field in Fig. 3) is stored. The specific content of the information is which country the network service providing area is located in ('country' field), whether data communication is possible ('service 1' field), the network system ('service 2' field), whether a TV phone is possible ('service 3' field), and whether the fees are high or low ('fees' field) and so forth, for example. The respective information stored in the roaming network information database 12 is preferably always the latest information for receiving the provision of information at regular intervals from the roaming networks 40 and 50, for example.

The network information reception section 13 is network information receiving means for receiving information specifying a plurality of roaming networks 40 and 50 which can be visited by the mobile communication terminal 30, this information being transmitted by the mobile communication terminal 30. The information specifying the roaming networks 40 and 50 is contained in the position registration-related signal as will be described subsequently and, therefore, is acquired from the signal received by the HLR function section 11. In other words, the network information reception section 13 receives information specifying the roaming networks 40 and 50 via the HLR function section 11 from the mobile communication terminal 30. The information specifying the roaming networks 40 and 50 corresponds to information specifying the roaming networks 40 and 50 stored in the roaming network information database 12 so that information stored in the roaming network information database 12 can be referenced. The information specifying the plurality of roaming networks 40 and 50 received by the network information reception section 13 is output to the priority level determination section 15.

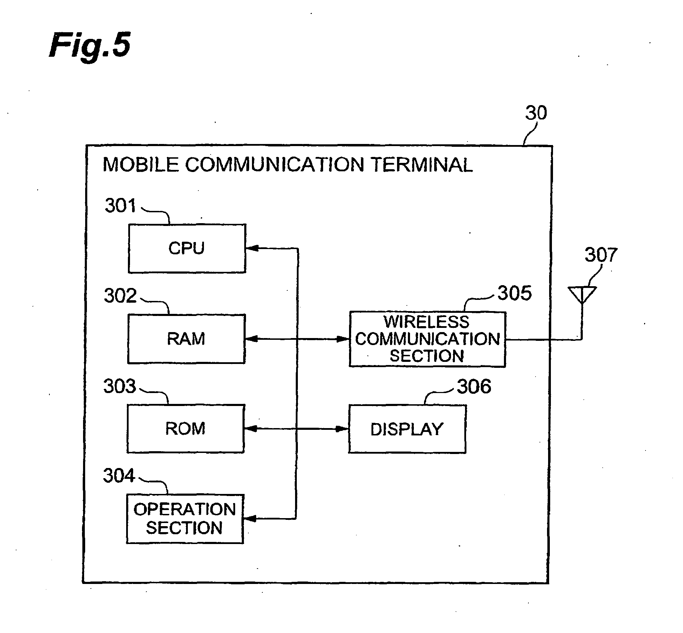

The requirement acquisition section 14 is requirement acquisition means for acquiring information on the requirements with respect to the roaming networks 40 and 50 of the user of the mobile communication terminal 30. The requirements are conditions that are determined when the user is using the roaming networks 40 and 50 such as that 'fees be low' and 'data communication be feasible', and so forth, for example. Further, the information on the requirements shown in Fig. 5 may be information assigning a priority level to the individual requirements. The information on the requirements is contained in a position-registration-related signal as will be described subsequently and is therefore acquired from the signal received by the HLR function section 11. In other words, the requirement acquisition section 14 receives the information on requirements via the HLR function section 11 from the mobile communication terminal 30. The information on the requirements acquired by the requirement acquisition section 14 is output to the priority level determination section 15.

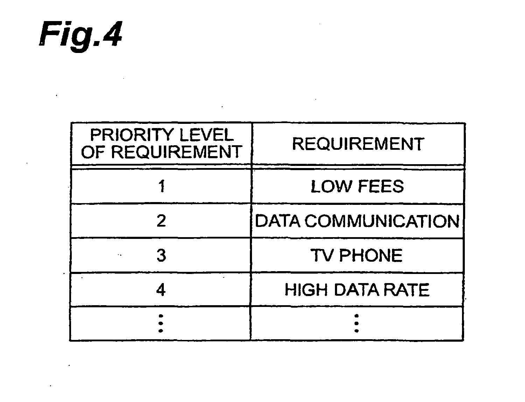

The priority level determination section 15 is priority determination means for determining the priority levels with which the mobile communication terminal 30 is to visit a plurality of roaming networks 40 and 50 specified by the information received by the network information reception section 13. The determination of the priority level is made with reference to the information relating to the roaming networks stored in the roaming network information database 12 on the basis of the requirements acquired by the requirement acquisition section 14. Here, the priority levels are determined such that the priority levels for those roaming networks which satisfy user requirements are high. For example, suppose that a plurality of roaming networks 40 and 50 are "network A" and "network B" in the network shown in Fig. 3 and the requirements are those shown in Fig. 4. Because the requirement with the highest priority level among the requirements is 'low fees', it is determined that the priority level of "network A" which has low fees is then high. Further, in cases where the roaming networks 40 and 50 for which the fee condition is the same exist, for example, a judgment is made for 'data communication is feasible', which is the next requirement. The priority levels may be determined by ranking the roaming networks 40 and 50, for example, or determined by assigning priority percentage to each of the roaming networks 40 and 50. The information on the priority level thus determined is output to the priority level information transmission section 16.

The priority level information transmission section 16 is priority level information transmission means for transmitting information on the priority level determined by the priority level determination section 15 to the mobile communication terminal 30. The aforementioned priority level information transmission section 16 is a function of the HLR 10 which is the roaming control device according to this embodiment.

The mobile communication terminal 30 is a device for performing mobile communication that specifically corresponds to a cellular phone, for example, and is capable of roaming. Fig. 5 shows the hardware constitution of the mobile communication terminal 30. As shown in Fig. 5, the mobile communication terminal 30 is constituted by hardware such as a CPU 301, a RAM 302, a ROM 303, an operation section 304, a wireless communication section 305, a display 306, and an antenna 307. As a result of the operation of such constituent elements, the respective functions of the mobile communication terminal 30 described hereinbelow are demonstrated.

As shown in Fig. 1, the mobile communication terminal 30 is constituted comprising a position registration section 31, a detection section 32, a network information transmission section 33, a requirement holding section 34, a requirement transmission section 35, and a priority level information reception section 36.

The position registration section 31 is means for performing position registration in which a position-registration-related signal is transmitted to a mobile communication network (to the base station thereof) and a report to the effect that position registration is complete is received from the mobile communication network Position registration is performed when the mobile communication terminal 30 visits the roaming networks 40 and 50. When there is a plurality of the roaming networks 40 and 50 that can be visited, it is judged whether to perform position registration with respect to either of the roaming networks 40 and 50 on the basis of priority level information for the roaming networks 40 and 50 which is received by the priority level information reception section 36. The position registration section 31 performs position registration with respect to the roaming network with the higher priority level of the two roaming networks 40 and 50. In other words, the position registration section 31 is network-visit processing means for performing processing to visit either of the plurality of roaming networks 40 and 50 on the basis of information on the priority level for the plurality of roaming networks 40 and 50 that is received by the priority level information reception section 36.

The detection section 32 is detection means for detecting a plurality of roaming networks 40 and 50 that can be visited when roaming. The detection of the roaming networks 40 and 50 is performed by receiving report information on the roaming networks 40 and 50, for example. The information specifying the detected roaming networks 40 and 50 is output to the network information transmission section 33.

The network information transmission section 33 is network information transmission means for transmitting the information specifying the plurality of roaming networks 40 and 50 detected by the detection section 32 to the HLR 10. The information specifying the roaming networks is output to the position registration section 31 for the purpose for position registration and contained in a signal that is transmitted to the HLR 10, the transmission of this information specifying the roaming networks being performed together with the transmission of a signal relating to the position registration. In other words, the transmission of the information specifying the roaming networks is performed via the position registration section 31. Further, the HLR10 is first set as the transmission destination for the information specifying the plurality of roaming networks 40 and 50 detected by the detection section 32.

The requirement holding section 34 is means for holding information on the requirements with respect to the roaming networks 40 and 50 of the user of the mobile communication terminal 30 which is shown in the aforementioned Fig. 4, for example. The information on the requirements is input beforehand by the user using the operation section 304 of the mobile communication terminal 30.

The requirement transmission section 35 is requirement transmission means for reading information on the requirements from the requirement holding section 34 and transmitting the information to the HER 10. The requirement information is output to the position registration section 31 for the purpose for position registration and contained in a signal that is transmitted to the HLR 10, the transmission of this requirement information being performed together with the transmission of a signal relating to the position registration. In other words, the transmission of the information specifying the requirement information is performed via the position registration section 31. Further, the HLR 10 is set beforehand as the transmission destination for the requirement information.

The priority level information reception section 36 is priority level information reception means for receiving information on the priority level with which its own terminal 30 is to visit the plurality of roaming networks 40 and 50 transmitted by the HLR 10 in accordance with the transmission of information specifying the plurality of roaming networks 40 and 50 performed by the network information transmission section 33. The received priority level information is output to the position registration section 31 and referenced.

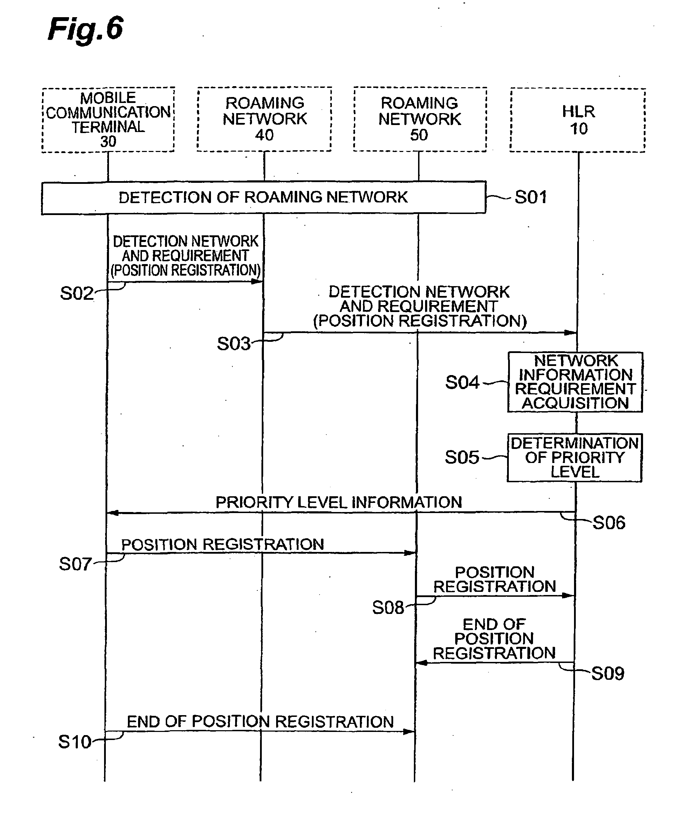

Subsequently, the processing that is executed by the mobile communication system 1 (HLR10 and mobile communication terminal 30) according to this embodiment (the roaming control method) will be described by using the flowchart in Fig. 6. This processing is performed when the power supply of the mobile communication terminal 30 is turned ON or when the mobile communication network that the mobile communication terminal 30 is visiting is shifted (when it is detected that the currently visited mobile communication network is out of range). In other words, this processing is performed when there is the possibility that new roaming will be performed by the mobile communication terminal 30 and also performed when the information on the requirements of the roaming networks 40 and 50 that is held by the mobile communication terminal 30 (the requirement holding section 34 thereof) is updated. This is because there is a change in the visited roaming networks 40 and 50 according to requirements.

First, the detection section 32 detects two roaming networks 40 and 50 for the mobile communication terminal 30 (S01, detection step). The information specifying the detected roaming networks 40 and 50 is output to the network information transmission section 33 for transmission to the HLR 10. Although there are two roaming networks 40 and 50 detected in this embodiment, there may also be three or more. Further, in cases where the home network 20 is contained within the detected mobile communication network, the visited mobile communication network is then the home network 20 and, therefore, the subsequent processing of the present invention is not executed. In addition, in cases where there is one detected roaming network, the visited mobile communication network is that roaming network. Hence, the subsequent processing of the present invention is not performed.

Thereafter, the position registration section 31 transmits a position-registration-related signal to one roaming network 40 among the plurality of roaming networks. Here, information specifying the roaming networks 40 and 50 detected by the network information transmission section 33 is output to the position registration section 31 and contained in the signal transmitted by the position registration section 31. In addition, information on the requirements is output by the requirement transmission section 35 to the position registration section 31 and contained in the signal that is transmitted by the position registration section 31 (S02, network information transmission step, requirement transmission step). Further, in cases where the mobile communication terminal 30 has been set to the manual search mode, the user's purpose is respected and, because the mobile communication terminal 30 visits the manually selected roaming network 40, 50, the information specifying the detected roaming networks 40, 50 is not transmitted and conventional position registration processing is executed.

Here, the roaming network to which the position-registration-related signal is transmitted is selected in accordance with the specifications. Alternatively, here, the priority sequence for the roaming networks to which the signal is transmitted may be pre-prepared and a selection made in accordance with this priority sequence. If the priority sequence is suitably prepared, because the probability of performing position registration with respect to the roaming network which is the highest-priority destination also according to the priority levels determined by the HLR 10 is high, the probability of re-executing position registration processing is low as will be described subsequently. As a result, the number of signals required for the position registration can be reduced.

Thereafter, the roaming network 40 which receives the position-registration-related signal from the mobile communication terminal 30 transmits this signal to the HLR 10 (S03). The position-registration-related signal thus transmitted is received by the HLR function section 11 in the HLR 10.

In the HLR 10, the network information reception section 13 acquires information specifying the roaming networks 40 and 50 from the signal received by the HLR function section 11. Further, the requirement acquisition section 14 acquires information on the requirements with respect to the roaming networks 40 and 50 of the user of the mobile communication terminal 30 from the signal received by the HLR function section 11 (S04, network information reception step, requirement acquisition step). The respective information received is output to the priority level determination section 15.

Thereafter, the priority level determination section 15 determines the priority level with which the mobile communication terminal 30 is to visit the plurality of roaming networks 40 and 50 (S05, priority level determination step). The information on the priority level is output to the priority level information transmission section 16 and transmitted from the priority level information transmission section 16 to the mobile communication terminal 30. The priority level information reception section 36 in the mobile communication terminal 30 receives this information (S06, priority level information transmission step, priority level information reception step). In this embodiment, the roaming network with the higher priority among the two roaming networks 40 and 50 is assumed to be the roaming network 50 (a roaming network that differs from the roaming network 40 which is the transmission destination of the position-registration-related signal in S02).

Here, in cases where the roaming network with the highest priority is the roaming network 40 which is the transmission destination of the position-registration-related signal in S02, because there is then no need to perform position registration once again from the mobile communication terminal 30, the HLR 10 performs position information registration for the transmission of a position-registration-related signal in S02 and issues a notice regarding the completion of position registration.

After receiving priority level information, information on the priority level that is received by the position registration section 31 from the priority level information reception section 36 is output by the mobile communication terminal 30. The position registration section 31 performs processing to visit the roaming network on the basis of the priority level information. In this embodiment, the position registration section 31 performs processing for position registration with respect to the roaming network 50 with the higher priority level. More specifically, the position registration section 31 transmits a position-registration-related signal to the roaming network 50 (S07, network-visit processing step). The roaming network 50, to which the position-registration-related signal is transmitted, transmits the position-registration-related signal to the HLR 10 (S08) and receives a notice regarding the completion of position registration that is transmitted by the HLR 10 in response to this transmission (S09). Thereafter, the position registration section 31 receives the notice regarding the completion of position registration that is transmitted by the roaming network 50 and the processing for a network visit is complete (S10, network-visit processing step).

Further; in cases where position registration is rejected by the roaming network 50 to which the position-registration-related signal is transmitted in S07, the position registration section 31 implements position registration with respect to the roaming network with the next highest priority level. So too thereafter, in cases where position registration is rejected, position registration is attempted in accordance with the priority level.

As mentioned hereinabove, according to this embodiment, if the user designates the requirements with respect to the roaming networks 40 and 50 of the mobile communication terminal 30, the user is able to automatically afford the mobile communication terminal 30 visit to the roaming network 40, 50 conforming to these requirements without examining the conditions and so forth of the roaming networks 40 and 50 ahead of time. Further, as long as an attempt is made to always store the latest information in the roaming network information database 12 of the HLR 10, it will be possible to reliably visit the roaming networks 40 and 50 conforming to requirements. Further, according to this embodiment, because the user is not required to set the priority levels for the individual roaming networks 40 and 50, even in cases where the user has not identified the individual roaming networks 40 and 50, the mobile communication terminal 30 is able to visit the suitable roaming network 40, 50.

Furthermore, as per this embodiment, assuming that requirement information is transmitted by the mobile communication terminal 30 and used in the determination of priority level upon receipt by the HLR 10, requirement information can be reliably acquired by the HLR 10 and the present invention can be reliably implemented.

However, the requirement information is not necessarily sent and received in the processing during roaming as per this embodiment and may instead be pre-registered in the HLR 10 which is the roaming control device according to this embodiment. The registered requirement information is stored in association with information specifying the mobile communication terminal 30 and the requirement acquisition section 14 judges that it is possible to distinguish which requirement information is for which user upon acquisition of the requirement information. Registration-related information may also be transmitted beforehand by the mobile communication terminal 30 and information transmitted via the Internet may also be used. In addition, the requirement information may be communicated to the operator of the HLR 10 via paperwork or FAX and registered by hand.

The roaming control device according to this embodiment is integrated with the HLR but there is not necessarily a requirement for such a constitution. The roaming control device may also be a device with a constitution that is independent from that of the HLR. The roaming control device may also be integrated with another device contained in the home network 20.

## Claims

1. A roaming control device (10) configured to receive a position-registration-related signal, comprising:
Home Location Register function means (11) for accepting registration of a positional information by receiving the position-registration-related signal from a mobile communication terminal (30) and managing the positional information;
a roaming network information database (12) for storing information relating to roaming networks (40, 50) that are mobile communication networks (40, 50) which the mobile communication terminal (30) is able to visit during roaming;
network information reception means (13) for receiving information contained in the position-registration-related signal received by the Home Location Register function means (11) for performing visit of a roaming network transmitted by the mobile communication terminal (30) and specifying a plurality of roaming networks (40, 50) that can be visited by the mobile communication terminal (30);
requirement acquisition means (14) for acquiring information on the requirements of a user of the mobile communication terminal (30) with respect to the roaming networks (40, 50);
priority level determination means (15) for determining the priority level with which the mobile communication terminal (30) is to visit the plurality of roaming networks (40, 50) specified by information that is received by the network information reception means (13) by referencing information relating to the roaming networks (40, 50) stored.in the roaming network information database (12) on the basis of the requirements acquired by the requirement acquisition means (14) ; and
priority level information transmission means (16) for transmitting information on the priority level determined by the priority level determination means (15) to the mobile communication terminal (30).

2. The roaming control device (10) according to claim 1,
wherein the requirement acquisition means (14) acquires the information on the requirements by receiving same from the mobile communication terminal (30).

3. The roaming control device (10) according to claim 1,
wherein the requirement acquisition means (14) performs acquisition from information on the requirements that is pre-registered.

4. A mobile communication terminal (30) configured to send a position-registration-related signal, comprising:
detection means (32) for detecting a plurality of roaming networks (40, 50) which are a plurality of mobile communication networks (40, 50) that can be visited during roaming;
network information transmission means (33) for transmitting information specifying the plurality of roaming networks (40, 50) detected by the detection means (32) contained in the position-registration-related signal for performing visit of a roaming network to Home Location Register function means (11) of a roaming control device (10), wherein the Home Location Register function means (11) accepts registration of a positional information by receiving the position-registration-related signal and manages the positional information;
priority level information reception means (36) for receiving information on the priority level with which its own terminal (30) is to visit the plurality of roaming networks (40, 50), that is transmitted by the roaming control device (10) in response to the transmission of information specifying the plurality of roaming networks (40, 50) that is carried out by the network information transmission means (33); and
network-visit processing means (31) for performing processing to visit any of the plurality of roaming networks (40, 50) on the basis of information on the priority level for the plurality of roaming networks (40, 50) that is received by the priority level information reception means (36).

5. The mobile communication terminal (30) according to claim 4, further comprising: requirement transmission means (35) for transmitting information on the requirements of a user with respect to the roaming networks (40, 50), to the roaming control device (10).

6. The mobile communication terminal (30) according to claim 5, wherein the requirement transmission means (35) transmits information on the requirements by including the information on the requirements in the position-registration-related signal that is transmitted by the mobile communication terminal (30).

7. A mobile communication system (1) that is constituted comprising a roaming control device (10) configured to receive a position-registration-related signal and a mobile communication terminal (30) configured to send the position-registration-related signal, wherein the roaming control device (10) comprises:
Home Location Register function means (11) for accepting registration of a positional information by receiving the position-registration-related signal from a mobile communication terminal (30) and managing the positional information;
a roaming network information database (12) for storing information relating to roaming networks (40, 50) that are mobile communication networks (40, 50) which the mobile communication terminal (30) is able to visit during roaming;
network information reception means (13) for receiving information contained in the position-registration-related signal received by the Home Location Register function means (11) for performing visit of a roaming network transmitted by the mobile communication terminal (30) and specifying a plurality of roaming networks (40, 50) that can be visited by the mobile communication terminal (30);
requirement acquisition means (14) for acquiring information on the requirements of a user of the mobile communication terminal (30) with respect to the roaming networks (40, 50);
priority level determination means (15) for determining the priority level with which the mobile communication terminal (30) is to visit the plurality of roaming networks (40, 50) specified by information that is received by the network information reception means (13) by referencing information relating to the roaming networks (40, 50) stored in the roaming network information database (12) on the basis of the requirements acquired by the requirement acquisition means (14); and
priority level information transmission means (16) for transmitting information on the priority level determined by the priority level determination means (15) to the mobile communication terminal (30),
and wherein the mobile communication terminal (30) comprises:
detection means (32) for detecting the plurality of roaming networks (40, 50);
network information transmission means (33) for transmitting information specifying the plurality of roaming networks (40, 50) detected by the detection means (32) contained in the position-registration-related signal for performing visit of a roaming network to the Home Location Register function means (11) of the roaming control device (10);
priority level information reception means (36) for receiving information on the priority level with which its own terminal (30) is to visit the plurality of roaming networks (40, 50), that is transmitted by the roaming control device (10) in response to the transmission of information specifying the plurality of roaming networks (40, 50) that is carried out by the network information transmission means (33); and
network-visit processing means (31) for performing processing to visit any of the plurality of roaming networks (40, 50) on the basis of information on the priority level for the plurality of roaming networks (40, 50) that is received by the priority level information reception means (36).

8. A roaming control method for a roaming control device (10) configured to receive a position-registration-related signal and comprising a roaming network information database (12) that stores information relating to roaming networks (40, 50) which are mobile communication networks (40, 50) that the mobile communication terminal (30) is able to visit during roaming, comprising:
Home Location Register function step (S02) of accepting registration of a positional information by receiving the position-registration-related signal from a mobile communication terminal (30) and managing the positional information;
a network information reception step (S03) of receiving information contained in the position-registration-related signal received in the Home Location Register function step (S02) for performing visit of a roaming network transmitted by the mobile communication terminal (30) and specifying a plurality of roaming networks (40, 50) that can be visited by the mobile communication terminal (30);
a requirement acquisition step (S04) of acquiring information on the requirements of a user of the mobile communication terminal (30) with respect to the roaming networks (40, 50);
a priority level determination step (S05) of determining the priority level with which the mobile communication terminal (30) is to visit the plurality of roaming networks (40, 50) specified by information that is received in the network information reception step (S03) by referencing information relating to the roaming networks (40, 50) stored in the roaming network information database (12) on the basis of the requirements acquired in the requirement acquisition step (S04); and
a priority level information transmission step (S06) of transmitting information on the priority level determined in the priority level determination step (S05) to the mobile communication terminal (30).

9. A roaming control method for a mobile communication terminal (30) configured to send a position-registration-related signal, comprising:
a detection step (S01) of detecting a plurality of roaming networks (40, 50) which are a plurality of mobile communication networks (40, 50) that can be visited during roaming;
a network information transmission step (S02) of transmitting information specifying the plurality of roaming networks (40, 50) detected in the detection step (S01) contained in the position-registration-related signal for performing visit of a roaming network to Home Location Register function means (11) of a roaming control device (10), wherein the Home Location Register function means (11) accepts registration of a positional information by receiving the position-registration-related signal and manages the positional information;
a priority level information reception step (S06) of receiving information on the priority level with which its own terminal (30) is to visit the plurality of roaming networks (40, 50), that is transmitted by the roaming control device (10) in response to the transmission of information specifying the plurality of roaming networks that is carried out in the network information transmission step (S02, S03); and
a network-visit processing step (S07) of performing processing to visit any of the plurality of roaming networks (40, 50) on the basis of information on the priority level for the plurality of roaming networks (40, 50) that is received in the priority level information reception step (S06).

10. A roaming control method for a mobile communication system (1) constituted having a mobile communication terminal (30) configured to send a position-registration-related signal and a roaming control device (10), which is configured to receive the position-registration-related signal and comprises a roaming network information database (12) that stores information relating to roaming networks (40, 50) which are mobile communication networks (40, 50) that the mobile communication terminal (30) is able to visit during roaming, comprising:
Home Location Register function step (S02) of accepting registration of a positional information by receiving the position-registration-related signal from the mobile communication terminal (30) and managing the positional information;
a network information reception step (S03) in which the roaming control device (10) receives information contained in the position-registration-related signal received in the Home Location Register function step (S02) for performing visit of a roaming network transmitted by the mobile communication terminal (30) and specifying a plurality of roaming networks (40, 50) that can be visited by the mobile communication terminal (30) ;
a requirement acquisition step (S04) in which the roaming control device (10) acquires information on the requirements of a user of the mobile communication terminal (30) with respect to the roaming networks (40, 50);
a priority level determination step (S05) in which the roaming control device (10) determines the priority level with which the mobile communication terminal (30) is to visit the plurality of roaming networks (40, 50) specified by information that is received in the network information reception step (S03) by referencing information relating to the roaming networks (40, 50) stored in the roaming network information database (12) on the basis of the requirements acquired in the requirement acquisition step (S04); and
a priority level information transmission step (S06) in which the roaming control device (10) transmits information on the priority level determined in the priority level determination (S05) step to the mobile communication terminal (30), and further comprising:
a detection step (S01) in which the mobile communication terminal (30) detects the plurality of roaming networks (40, 50);
a network information transmission step (S02) in which the mobile communication terminal (30) transmits information specifying the plurality of roaming networks (40, 50) detected in the detection step (S01) contained in the position-registration-related signal for performing visit of a roaming network to the Home Location Register function means (11) of the roaming control device (10);
a priority level information reception step (S06) in which the mobile communication terminal (30) receives information on the priority level with which its own terminal (30) is to visit the plurality of roaming networks (40, 50), that is transmitted by the roaming control device (10) in response to the transmission of information specifying the plurality of roaming networks (40, 50) that is carried out in the network information transmission step (S02, S03) ; and
a network-visit processing step (S07) in which the mobile communication terminal (30) performs processing to visit any of the plurality of roaming networks (40, 50) on the basis of information on the priority level for the plurality of roaming networks (40, 50) that is received in the priority level information reception step (S06).

## Patentansprüche

1. Roaming-Steuervorrichtung (10), eingerichtet zum Empfangen eines Position-Registrierungs-bezogenen Signals, aufweisend:
Heimatortverzeichnisfunktionsmittel (11) zum Akzeptieren der Registrierung einer Positionsinformation durch Empfangen des Position-Registrierungs-bezogenen Signals von einem mobilen Kommunikationsendgerät (30) und
Verwalten der Positionsinformation;
eine Roaming-Netzwerk-Informationsdatenbank (12) zum Speichern von Information, die Roaming-Netzwerke (40, 50) betrifft, die Mobilkommunikationsnetzwerke (40, 50) sind, die das mobile Kommunikationsendgerät (30) beim Roaming besuchen kann;
Netzwerkinformationsempfangsmittel (13) zum Empfangen von Information, die in dem von den
Heimatortverzeichnisfunktionsmitteln (11) empfangenen,
von dem mobilen Kommunikationsendgerät (30) gesendeten Position-Registrierungs-bezogenen Signal zum Durchführen des Besuchs eines Roaming-Netzwerks enthalten ist, und
eine Mehrzahl von Roaming-Netzwerken (40, 50), die von dem mobilen Kommunikationsendgerät (30) besucht werden können, spezifiziert;
Erfordernisbeschaffungsmittel (14) zum Beschaffen von Information über die Erfordernisse eines Benutzers des mobilen Kommunikationsendgeräts (30) in Bezug auf die Roaming-Netzwerke (40, 50);
Prioritätsstufenermittlungsmittel (15) zum Ermitteln der Prioritätsstufe, mit dem das mobile
Kommunikationsendgerät (30) die Mehrzahl von Roaming-Netzwerken (40, 50) besuchen soll, die spezifiziert sind durch die Information, die durch die
Netzwerkinformationsempfangsmittel (13) empfangen wird,
durch Bezugnahme auf Information in Bezug auf die Roaming-Netzwerke (40, 50), die in der Roaming-Netzwerk-Informationsdatenbank (12) gespeichert ist, basierend auf den von den Erfordernisbeschaffungsmitteln (14) beschafften Erfordernissen; und
Prioritätsstufeninformationsübertragungsmittel (16) zum Übertragen von Information über die von den Prioritätsstufenermittlungsmitteln (15) ermittelte Prioritätsstufe an das mobile Kommunikationsendgerät (30).

2. Roaming-Steuervorrichtung (10) gemäß Anspruch 1, wobei die Erfordernisbeschaffungsmittel (14) die Information über die Erfordernisse beschafft, indem sie diese von dem mobilen Kommunikationsendgerät (30) empfängt.

3. Roaming-Steuervorrichtung (10) gemäß Anspruch 1, wobei die Erfordernisbeschaffungsmittel (14) Information über die Erfordernisse beschaffen, die vorregistriert ist.

4. Mobiles Kommunikationsendgerät (30), eingerichtet zum Senden eines Position-Registrierungs-bezogenen Signals aufweisend:
Detektiermittel (32) zum Detektieren einer Mehrzahl von Roaming-Netzwerken (40, 50), die
Mobilkommunikationsnetzwerke (40, 50) sind, die beim Roaming besucht werden können;
Netzwerkinformationsübertragungsmittel (33) zum Übertragen von Information, die die durch die Detektionsmittel (32) detektierte Mehrzahl von Roaming-Netzwerken (40, 50) spezifiziert und in dem Position-Registrierungs-bezogenen Signal zum Durchführen eines Besuchs eines Roaming-Netzwerks enthalten ist, an Heimatortverzeichnisfunktionsmittel (11) einer Roaming-Steuereinrichtung (10), wobei die
Heimatortverzeichnisfunktionsmittel (11) eine Registrierung einer Positionsinformation durch Empfangen des Position-Registrierungs-bezogenen Signals akzeptieren und die Positionsinformation verwalten;
Prioritätsstufeninformationsempfangsmittel (36) zum Empfangen von Information über die Prioritätsstufe, mit dem sein eigenes Endgerät (30) die Mehrzahl von Roaming-Netzwerken (40, 50) besuchen soll, die von der Roaming-Steuereinrichtung (10) in Antwort auf die Übertragung von Information, die die Mehrzahl von Roaming-Netzwerken (40, 50) spezifiziert, die von den
Netzwerkinformationsübertragungsmitteln (33) durchgeführt wird, übertragen wird; und
Netzwerkbesuchsverarbeitungsmittel (31) zum Durchführen einer Verarbeitung zum Besuchen irgendeines der Mehrzahl von Roaming-Netzwerken (40, 50) basierend auf Information über die Prioritätsstufe für die Mehrzahl von Roaming-Netzwerken (40, 50), die durch die Prioritätsstufeninformationsempfangsmittel (36) empfangen wird.

5. Mobiles Kommunikationsendgerät (30) gemäß Anspruch 4, ferner aufweisend:
Erfordernisübertragungsmittel (35) zum Übertragen von Information über die Erfordernisse eines Benutzers in Bezug auf die Roaming-Netzwerke (40, 50) an die Roaming-Steuervorrichtung (10).

6. Mobiles Kommunikationsendgerät (30) gemäß Anspruch 5, wobei die Erfordernisübertragungsmittel (35) Information über die Erfordernisse übertragen, indem sie die Information über die Erfordernisse in das Position-Registrierungs-bezogenen Signal, das von dem mobilen Kommunikationsendgerät (30) übertragen wird, einfügen.

7. Mobilkommunikationssystem (1), das so gebildet ist, dass es eine Roaming-Steuervorrichtung (10), die eingerichtet ist, ein Position-Registrierungs-bezogenes Signal zu empfangen, und ein mobiles Kommunikationsendgerät (30), das eingerichtet ist, das Position-Registrierungsbezogene Signal zu senden, aufweist, wobei die Roaming-Steuereinrichtung (10) aufweist:
Heimatortverzeichnisfunktionsmittel (11) zum Akzeptieren der Registrierung einer Positionsinformation durch Empfangen des Position-Registrierungs-bezogenen Signals von einem mobilen Kommunikationsendgerät (30) und
Verwalten der Positionsinformation;
eine Roaming-Netzwerk-Informationsdatenbank (12) zum Speichern von Information, die Roaming-Netzwerke (40, 50) betrifft, die Mobilkommunikationsnetzwerke (40, 50) sind, die das mobile Kommunikationsendgerät (30) beim Roaming besuchen kann;
Netzwerkinformationsempfangsmittel (13) zum Empfangen von Information, die in dem von den
Heimatortverzeichnisfunktionsmitteln (11) empfangenen,
von dem mobilen Kommunikationsendgerät (30) gesendeten Position-Registrierungs-bezogenen Signal zum Durchführen des Besuchs eines Roaming-Netzwerks enthalten ist und
eine Mehrzahl von Roaming-Netzwerken (40, 50), die von dem mobilen Kommunikationsendgerät (30) besucht werden können, spezifiziert;
Erfordernisbeschaffungsmittel (14) zum Beschaffen von Information über die Erfordernisse eines Benutzers des mobilen Kommunikationsendgeräts (30) in Bezug auf die Roaming-Netzwerke (40, 50);
Prioritätsstufenermittlungsmittel (15) zum Ermitteln der Prioritätsstufe, mit dem das mobile
Kommunikationsendgerät (30) die Mehrzahl von Roaming-Netzwerken (40, 50) besuchen soll, die spezifiziert sind durch die Information, die durch die
Netzwerkinformationsempfangsmittel (13) empfangen wird,
durch Bezugnahme auf Information in Bezug auf die Roaming-Netzwerke (40, 50), die in der Roaming-Netzwerk-Informationsdatenbank (12) gespeichert ist, basierend auf den von den Erfordernisbeschaffungsmitteln (14) beschafften Erfordernissen; und
Prioritätsstufeninformationsübertragungsmittel (16) zum Übertragen von Information über die von den Prioritätsstufenermittlungsmitteln (15) ermittelte Prioritätsstufe an das mobile Kommunikationsendgerät (30)
und wobei das mobile Kommunikationsendgerät (30) aufweist:
Detektiermittel (32) zum Detektieren der Mehrzahl von Roaming-Netzwerken (40, 50);
Netzwerkinformationsübertragungsmittel (33) zum Übertragen von Information, die die durch die Detektionsmittel (32) detektierte Mehrzahl von Roaming-Netzwerken (40, 50) spezifiziert und in dem Position-Registrierungs-bezogenen Signal zum Durchführen eines Besuchs eines Roaming-Netzwerks enthalten ist, an die Heimatortverzeichnisfunktionsmittel (11) der Roaming-Steuereinrichtung (10);
Prioritätsstufeninformationsempfangsmittel (36) zum Empfangen von Information über die Prioritätsstufe, mit dem sein eigenes Endgerät (30) die Mehrzahl von Roaming-Netzwerken (40, 50) besuchen soll, die von der Roaming-Steuereinrichtung (10) in Antwort auf die Übertragung von Information, die die Mehrzahl von Roaming-Netzwerken (40, 50) spezifiziert, die von den
Netzwerkinformationsübertragungsmitteln (33) durchgeführt wird, übertragen wird; und
Netzwerkbesuchsverarbeitungsmittel (31) zum Durchführen einer Verarbeitung zum Besuchen irgendeines der Mehrzahl von Roaming-Netzwerken (40, 50) basierend auf Information über die Prioritätsstufe für die Mehrzahl von Roaming-Netzwerken (40, 50), die durch die Prioritätsstufeninformationsempfangsmittel (36) empfangen wird.

8. Roaming-Steuerverfahren für eine Roaming-Steuervorrichtung (10), eingerichtet zum Empfangen eines Position-Registrierungs-bezogenen Signals und aufweisend eine Roaming-Netzwerk-Informationsdatenbank (12) zum Speichern von Information, die Roaming-Netzwerke (40, 50) betrifft, die Mobilkommunikationsnetzwerke (40, 50) sind, die das mobile Kommunikationsendgerät (30) beim Roaming besuchen kann, aufweisend:
einen Heimatortverzeichnisfunktionsschritt (S02) zum Akzeptieren der Registrierung einer Positionsinformation durch Empfangen des Position-Registrierungs-bezogenen Signals von einem mobilen Kommunikationsendgerät (30) und Verwalten der Positionsinformation;
einen Netzwerkinformationsempfangsschritt (S03) zum Empfangen von Information, die in dem in dem Heimatortverzeichnisfunktionsschritt (S02) empfangenen,
von dem mobilen Kommunikationsendgerät (30) gesendeten Position-Registrierungs-bezogenen Signal zum Durchführen des Besuchs eines Roaming-Netzwerks enthalten ist und
eine Mehrzahl von Roaming-Netzwerken (40, 50), die von dem mobilen Kommunikationsendgerät (30) besucht werden können, spezifiziert;
einen Erfordernisbeschaffungsschritt (S04) zum Beschaffen von Information über die Erfordernisse eines Benutzers des mobilen Kommunikationsendgeräts (30) in Bezug auf die Roaming-Netzwerke (40, 50);
einen Prioritätsstufenermittlungsschritt (S05) zum Ermitteln der Prioritätsstufe, mit dem das mobile Kommunikationsendgerät (30) die Mehrzahl von Roaming-Netzwerken (40, 50) besuchen soll, die spezifiziert sind durch die Information, die durch in dem Netzwerkinformationsempfangsschritt (S03) empfangen wird, durch Bezugnahme auf Information in Bezug auf die Roaming-Netzwerke (40, 50), die in der Roaming-Netzwerk-Informationsdatenbank (12) gespeichert ist, basierend auf den in dem Erfordernisbeschaffungsschritt (S04) beschafften Erfordernissen; und
ein Prioritätsstufeninformationsübertragungsschritt (S06) zum Übertragen von Information über die in dem Prioritätsstufenermittlungsschritt (S05) ermittelte Prioritätsstufe an das mobile Kommunikationsendgerät (30).

9. Roaming-Steuerverfahren für ein mobiles Kommunikationsendgerät (30), eingerichtet zum Senden eines Position-Registrierungs-bezogenen Signals, aufweisend:
einen Detektierschritt (S01) zum Detektieren einer Mehrzahl von Roaming-Netzwerken (40, 50), die Mobilkommunikationsnetzwerke (40, 50) sind, die beim Roaming besucht werden können;
einen Netzwerkinformationsübertragungsschritt (S02) zum Übertragen von Information, die die in dem Detektionsschritt (S01) detektierte Mehrzahl von Roaming-Netzwerken (40, 50) spezifiziert und in dem Position-Registrierungs-bezogenen Signal zum Durchführen eines Besuchs eines Roaming-Netzwerks enthalten ist, an Heimatortverzeichnisfunktionsmittel (11) einer Roaming-Steuereinrichtung (10), wobei die
Heimatortverzeichnisfunktionsmittel (11) eine Registrierung einer Positionsinformation durch Empfangen des Position-Registrierungs-bezogenen Signals akzeptieren und die Positionsinformation verwalten;
einen Prioritätsstufeninformationsempfangsschritt (S06) zum Empfangen von Information über die Prioritätsstufe,
mit dem sein eigenes Endgerät (30) die Mehrzahl von Roaming-Netzwerken (40, 50) besuchen soll, die von der Roaming-Steuereinrichtung (10) in Antwort auf die Übertragung von Information, die die Mehrzahl von Roaming-Netzwerken (40, 50) spezifiziert, die in dem Netzwerkinformationsübertragungsschritt (S02, S03) durchgeführt wird, übertragen wird; und
einen Netzwerkbesuchsverarbeitungsschritt (S07) zum Durchführen einer Verarbeitung zum Besuchen irgendeines der Mehrzahl von Roaming-Netzwerken (40, 50) basierend auf Information über die Prioritätsstufe für die Mehrzahl von Roaming-Netzwerken (40, 50), die in dem Prioritätsstufeninformationsempfangsschritt (S06) empfangen wird.

10. Roaming-Steuerverfahren für ein
Mobilkommunikationssystem (1), das so gebildet ist, dass es ein mobiles Kommunikationsendgerät (30), das eingerichtet ist, ein Position-Registrierungs-bezogenes Signal zu senden, und eine Roaming-Steuervorrichtung (10), die eingerichtet ist, das Position-Registrierungsbezogene Signal zu empfangen, aufweist, und eine Roaming-Netzwerk-Informationsdatenbank (12) aufweist, die Information, die Roaming-Netzwerke (40, 50) betrifft, die Mobilkommunikationsnetzwerke (40, 50) sind, die das mobile Kommunikationsendgerät (30) beim Roaming besuchen kann, speichert, aufweisend:
einen Heimatortverzeichnisfunktionsschritt (S02) zum Akzeptieren der Registrierung einer Positionsinformation durch Empfangen des Position-Registrierungs-bezogenen Signals von einem mobilen Kommunikationsendgerät (30) und Verwalten der Positionsinformation;
einen Netzwerkinformationsempfangsschritt (S03), in dem die Roaming-Steuervorrichtung (10) Information, die in dem in dem Heimatortverzeichnisfunktionsschritt (S02) empfangenen, von dem mobilen Kommunikationsendgerät (30) gesendeten Position-Registrierungs-bezogenen Signal zum Durchführen des Besuchs eines Roaming-Netzwerks enthalten ist und eine Mehrzahl von Roaming-Netzwerken (40, 50), die von dem mobilen Kommunikationsendgerät (30) besucht werden können, spezifiziert, empfangen;
einen Erfordernisbeschaffungsschritt (S04), in dem die Roaming-Steuervorrichtung (10) Information über die Erfordernisse eines Benutzers des mobilen Kommunikationsendgeräts (30) in Bezug auf die Roaming-Netzwerke (40, 50) beschafft;
einen Prioritätsstufenermittlungsschritt (S05), in dem die Roaming-Steuervorrichtung (10) die Prioritätsstufe ermittelt, mit dem das mobile Kommunikationsendgerät (30) die Mehrzahl von Roaming-Netzwerken (40, 50) besuchen soll, die spezifiziert sind durch die Information, die in dem
Netzwerkinformationsempfangsschritt (S03) empfangen wird, durch Bezugnahme auf Information in Bezug auf die Roaming-Netzwerke (40, 50), die in der Roaming-Netzwerk-Informationsdatenbank (12) gespeichert ist, basierend auf den von in dem Erfordernisbeschaffungsschritt (S04) beschafften Erfordernissen; und
einen Prioritätsstufeninformationsübertragungsschritt (S06), in dem die Roaming-Steuervorrichtung (10) Information über die in dem
Prioritätsstufenermittlungsschritt (S05) ermittelte Prioritätsstufe an das mobile Kommunikationsendgerät (30) übermittelt, und ferner aufweisend:
einen Detektierschritt (S01), in dem das mobile Kommunikationsendgerät (30) die Mehrzahl von Roaming-Netzwerken (40, 50) detektiert;
einen Netzwerkinformationsübertragungsschritt (S02), in dem das mobile Kommunikationsendgerät (30) Information, die die in dem Detektionsschritt (S01) detektierte Mehrzahl von Roaming-Netzwerken (40, 50) spezifiziert und in dem Position-Registrierungs-bezogenen Signal zum Durchführen eines Besuchs eines Roaming-Netzwerks enthalten ist, an die Heimatortverzeichnisfunktionsmittel (11) der Roaming-Steuereinrichtung (10), überträgt;
einen Prioritätsstufeninformationsempfangsschritt (S06), in dem das mobile Kommunikationsendgerät (30) Information über die Prioritätsstufe, mit dem sein eigenes Endgerät (30) die Mehrzahl von Roaming-Netzwerken (40, 50) besuchen soll, empfängt, die von der Roaming-Steuereinrichtung (10) in Antwort auf die Übertragung von Information, die die Mehrzahl von Roaming-Netzwerken (40, 50) spezifiziert, die in dem Netzwerkinformationsübertragungsschritt (S02, S03) durchgeführt wird, übertragen wird; und
einen Netzwerkbesuchsverarbeitungsschritt (S07), in dem das mobile Kommunikationsendgerät (30) eine Verarbeitung zum Besuchen irgendeines der Mehrzahl von Roaming-Netzwerken (40, 50) basierend auf Information über die Prioritätsstufe für die Mehrzahl von Roaming-Netzwerken (40, 50), die in dem
Prioritätsstufeninformationsempfangsschritt (S06) empfangen wird, durchführt.

## Revendications

1. Dispositif de contrôle d'itinérance (10) configuré pour recevoir un signal se rapportant à l'enregistrement d'une position, comprenant :
des moyens de fonction d'enregistreur de localisation nominal (11) destinés à accepter l'enregistrement d'informations de position en recevant le signal se rapportant à l'enregistrement d'une position en provenance d'un terminal de communication mobile (30) et à gérer les informations de position ;
une base de données d'informations de réseau d'itinérance (12) destinée à stocker des informations se rapportant à des réseaux d'itinérance (40, 50) qui sont des réseaux de communications mobiles (40, 50) que le terminal de communication mobile (30) peut visiter au cours de son itinérance ;
des moyens de réception d'informations de réseau (13) destinés à recevoir les informations contenues dans le signal se rapportant à l'enregistrement d'une position reçu par les moyens de fonction d'enregistreur de localisation nominal (11) destiné à exécuter une visite d'un réseau d'itinérance que transmet le terminal de communication mobile (30) et à spécifier une pluralité de réseaux d'itinérance (40, 50) qui peuvent être visités par le terminal de communication mobile (30) ;
des moyens d'acquisition de besoins (14) destinés à acquérir des informations concernant les besoins d'un utilisateur du terminal de communication mobile (30) en ce qui concerne les réseaux d'itinérance (40, 50) ;
des moyens de détermination de niveau de priorité (15) destinés à déterminer le niveau de priorité avec lequel le terminal de communication mobile (30) visite la pluralité de réseaux d'itinérance (40, 50) spécifiés par les informations qui sont reçues par les moyens de réception d'informations de réseau (13) en se référençant aux informations se rapportant aux réseaux d'itinérance (40, 50) stockées dans la base de données d'informations de réseau d'itinérance (12) sur la base des besoins acquis par les moyens d'acquisition de besoins (14) ; et
des moyens de transmission d'informations de niveau de priorité (16) destinés à transmettre au terminal de communication mobile (30) des informations concernant le niveau de priorité déterminé par les moyens de détermination de niveau de priorité (15).

2. Dispositif de contrôle d'itinérance (10) selon la revendication 1,
dans lequel les moyens d'acquisition de besoins (14) acquièrent les informations concernant les besoins en les recevant en provenance du terminal de communication mobile (30).

3. Dispositif de contrôle d'itinérance (10) selon la revendication 1,
dans lequel les moyens d'acquisition de besoins (14) exécutent l'acquisition à partir des informations concernant les besoins qui sont préenregistrées.

4. Terminal de communication mobile (30) configuré pour envoyer un signal se rapportant à l'enregistrement d'une position, comprenant :
des moyens de détection (32) destinés à détecter une pluralité de réseaux d'itinérance (40, 50) qui sont une pluralité de réseaux de communications mobiles (40, 50) qui peuvent être visités au cours d'une itinérance ;
des moyens de transmission d'informations de réseau (33) destinés à transmettre des informations qui spécifient la pluralité de réseaux d'itinérance (40, 50) détectés par les moyens de détection (32) contenues dans le signal se rapportant à l'enregistrement d'une position afin d'exécuter une visite d'un réseau d'itinérance aux moyens de fonction d'enregistreur de localisation nominal (11) d'un dispositif de contrôle d'itinérance (10), dans lequel les moyens de fonction d'enregistreur de localisation nominal (11) acceptent l'enregistrement des informations de position en recevant le signal se rapportant à l'enregistrement d'une position et gèrent les informations de position ;
des moyens de réception d'informations de niveau de priorité (36) destinés à recevoir des informations concernant le niveau de priorité avec lequel son propre terminal (30) visite la pluralité de réseaux d'itinérance (40, 50), qui sont transmises par le dispositif de contrôle d'itinérance (10) en réponse à la transmission des informations spécifiant la pluralité de réseaux d'itinérance (40, 50) qu'exécutent les moyens de transmission d'informations de réseau (33) ; et
des moyens de traitement de visite de réseau (31) destinés à exécuter un traitement pour visiter n'importe lequel de la pluralité de réseaux d'itinérance (40, 50) sur la base des informations concernant le niveau de priorité pour la pluralité de réseaux d'itinérance (40, 50) qui sont reçues par les moyens de réception d'informations de niveau de priorité (36).

5. Terminal de communication mobile (30) selon la revendication 4, comprenant en outre :
des moyens de transmission de besoins (35) destinés à transmettre au dispositif de contrôle d'itinérance (10) des informations concernant les besoins d'un utilisateur en ce qui concerne les réseaux d'itinérance (40, 50).

6. Terminal de communication mobile (30) selon la revendication 5, dans lequel les moyens de transmission de besoins (35) transmettent des informations concernant les besoins en incluant des informations concernant les besoins dans le signal se rapportant à l'enregistrement d'une position qui est transmis par le terminal de communication mobile (30).

7. Système de communication mobile (1) qui est constitué par un dispositif de contrôle d'itinérance (10) configuré pour recevoir un signal se rapportant à l'enregistrement d'une position et par un terminal de communication mobile (30) configuré pour envoyer le signal se rapportant à l'enregistrement d'une position, dans lequel le dispositif de contrôle d'itinérance (10) comprend :
des moyens de fonction d'enregistreur de localisation nominal (11) destinés à accepter l'enregistrement d'informations de position en recevant le signal se rapportant à l'enregistrement d'une position en provenance d'un terminal de communication mobile (30) et à gérer les informations de position ;
une base de données d'informations de réseau d'itinérance (12) destinée à stocker des informations se rapportant à dés réseaux d'itinérance (40, 50) qui sont des réseaux de communication mobile (40, 50) que le terminal de communication mobile (30) peut visiter au cours de son itinérance ;
des moyens de réception d'informations de réseau (13) destinés à recevoir les informations contenues dans le signal se rapportant à l'enregistrement d'une position reçu par les moyens de fonction d'enregistreur de localisation nominal (11) destiné à exécuter une visite d'un réseau d'itinérance que transmet le terminal de communication mobile (30) et à spécifier une pluralité de réseaux d'itinérance (40, 50) qui peuvent être visités par le terminal de communication mobile (30) ;
des moyens d'acquisition de besoins (14) destinés à acquérir des informations concernant les besoins d'un utilisateur du terminal de communication mobile (30) en ce qui concerne les réseaux d'itinérance (40, 50) ;
des moyens de détermination de niveau de priorité (15) destinés à déterminer le niveau de priorité avec lequel le terminal de communication mobile (30) visite la pluralité de réseaux d'itinérance (40, 50) spécifiés par les informations qui sont reçues par les moyens de réception d'informations de réseau (13) en se référençant aux informations se rapportant aux réseaux d'itinérance (40, 50) stockées dans la base de données d'informations de réseau d'itinérance (12) sur la base des besoins acquis par les moyens d'acquisition de besoins (14) ; et
des moyens de transmission d'informations de niveau de priorité (16) destinés à transmettre au terminal de communication mobile (30) des informations concernant le niveau de priorité déterminé par les moyens de détermination de niveau de priorité (15) ;
et dans lequel le terminal de communication mobile (30) comprend :
des moyens de détection (32) destinés à détecter la pluralité de réseaux d'itinérance (40, 50) ;
des moyens de transmission d'informations de réseau (33) destinés à transmettre des informations qui spécifient la pluralité de réseaux d'itinérance (40, 50) détectés par les moyens de détection (32) contenues dans le signal se rapportant à l'enregistrement d'une position afin d'exécuter une visite d'un réseau d'itinérance aux moyens de fonction d'enregistreur de localisation nominal (11) du dispositif de contrôle d'itinérance (10) ;
des moyens de réception d'informations de niveau de priorité (36) destinés à recevoir des informations concernant le niveau de priorité avec lequel son propre terminal (30) visite la pluralité de réseaux d'itinérance (40, 50), qui sont transmises par le dispositif de contrôle d'itinérance (10) en réponse à la transmission des informations spécifiant la pluralité de réseaux d'itinérance (40, 50) qu'exécutent les moyens de transmission d'informations de réseau (33) ; et
des moyens de traitement de visite de réseau (31) destinés à exécuter un traitement pour visiter n'importe lequel de la pluralité de réseaux d'itinérance (40, 50) sur la base des informations concernant le niveau de priorité pour la pluralité de réseaux d'itinérance (40, 50) qui sont reçues par les moyens de réception d'informations de niveau de priorité (36).

8. Procédé de contrôle d'itinérance pour un dispositif de contrôle d'itinérance (10) configuré pour recevoir un signal se rapportant à l'enregistrement d'une position et comprenant une base de données d'informations de réseau d'itinérance (12) qui stocke des informations se rapportant aux réseaux d'itinérance (40, 50) qui sont des réseaux de communications mobiles (40, 50) que le terminal de communication mobile (30) peut visiter au cours de son itinérance, comprenant :
une étape de fonction d'enregistreur de localisation nominal (S02) consistant à accepter l'enregistrement d'informations de position en recevant le signal se rapportant à l'enregistrement d'une position en provenance d'un terminal de communication mobile (30) et à gérer les informations de position ;
une étape de réception d'informations de réseau (S03) consistant à recevoir les informations contenues dans le signal se rapportant à l'enregistrement d'une position reçu dans l'étape de fonction d'enregistreur de localisation nominal (S02) destiné à exécuter une visite d'un réseau d'itinérance que transmet le terminal de communication mobile (30) et à spécifier une pluralité de réseaux d'itinérance (40, 50) qui peuvent être visités par le terminal de communication mobile (30) ;
une étape d'acquisition de besoins (S04) consistant à acquérir des informations concernant les besoins d'un utilisateur du terminal de communication mobile (30) en ce qui concerne les réseaux d'itinérance (40, 50) ;
une étape de détermination de niveau de priorité (S05) consistant à déterminer le niveau de priorité avec lequel le terminal de communication mobile (30) visite la pluralité de réseaux d'itinérance (40, 50) spécifiés par les informations qui sont reçues dans l'étape de réception d'informations de réseau (S03) en se référençant aux informations se rapportant aux réseaux d'itinérance (40, 50) stockées dans la base de données d'informations de réseau d'itinérance (12) sur la base des besoins acquis dans l'étape d'acquisition de besoins (S04) ; et
une étape de transmission d'informations de niveau de priorité (S06) consistant à transmettre au terminal de communication mobile (30) des informations concernant le niveau de priorité déterminé dans l'étape de détermination de niveau de priorité (S05).

9. Procédé de contrôle d'itinérance pour un terminal de communication mobile (30) configuré pour envoyer un signal se rapportant à l'enregistrement d'une position, comprenant :
une étape de détection (S01) consistant à détecter une pluralité de réseaux d'itinérance (40, 50) qui sont une pluralité de réseaux de communications mobiles (40, 50) qui peuvent être visités au cours d'une itinérance ;
une étape de transmission d'informations de réseau (S02) consistant à transmettre des informations qui spécifient la pluralité de réseaux d'itinérance (40, 50) détectés dans l'étape de détection (S01) contenues dans le signal se rapportant à l'enregistrement d'une position afin d'exécuter une visite d'un réseau d'itinérance aux moyens de fonction d'enregistreur de localisation nominal (11) d'un dispositif de contrôle d'itinérance (10), dans lequel les moyens de fonction d'enregistreur de localisation nominal (11) acceptent l'enregistrement des informations de position en recevant le signal se rapportant à l'enregistrement d'une position et gèrent les informations de position ;
une étape de réception d'informations de niveau de priorité (S06) consistant à recevoir des informations concernant le niveau de priorité avec lequel son propre terminal (30) visite la pluralité de réseaux d'itinérance (40, 50), qui sont transmises par le dispositif de contrôle d'itinérance (10) en réponse à la transmission des informations spécifiant la pluralité de réseaux d'itinérance qu'exécute l'étape de transmission d'informations de réseau (S02, S03) ; et
une étape de traitement de visite de réseau (S07) consistant à exécuter un traitement pour visiter n'importe lequel de la pluralité de réseaux d'itinérance (40, 50) sur la base des informations concernant le niveau de priorité pour la pluralité de réseaux d'itinérance (40, 50) qui sont reçues dans l'étape de réception d'informations de niveau de priorité (S06).

10. Procédé de contrôle d'itinérance pour un système de communication mobile (1) constitué par un terminal de communication mobile (30) configuré pour envoyer un signal se rapportant à l'enregistrement d'une position et un dispositif de contrôle d'itinérance (10), qui est configuré pour recevoir le signal se rapportant à l'enregistrement d'une position et qui comprend une base de données d'informations de réseau d'itinérance (12) qui stockent des informations se rapportant aux réseaux d'itinérance (40, 50) qui sont des réseaux de communications mobiles (40, 50) que le terminal de communication mobile (30) peut visiter au cours de son itinérance, comprenant :
une étape de fonction d'enregistreur de localisation nominal (S02) consistant à accepter l'enregistrement d'informations de position en recevant le signal se rapportant à l'enregistrement d'une position en provenance du terminal de communication mobile (30) et à gérer les informations de position ;
une étape de réception d'informations de réseau (S03) dans laquelle le dispositif de contrôle d'itinérance (10) reçoit les informations contenues dans le signal se rapportant à l'enregistrement d'une position reçu dans l'étape de fonction d'enregistreur de localisation nominal (S02) destiné à exécuter une visite d'un réseau d'itinérance que transmet le terminal de communication mobile (30) et à spécifier une pluralité de réseaux d'itinérance (40, 50) qui peuvent être visités par le terminal de communication mobile (30) ;
une étape d'acquisition de besoins (S04) dans laquelle le dispositif de contrôle d'itinérance (10) acquiert des informations concernant les besoins d'un utilisateur du terminal de communication mobile (30) en ce qui concerne les réseaux d'itinérance (40, 50) ;
une étape de détermination de niveau de priorité (S05) dans laquelle le dispositif de contrôle d'itinérance (10) détermine le niveau de priorité avec lequel le terminal de communication mobile (30) visite la pluralité de réseaux d'itinérance (40, 50) spécifiés par les informations qui sont reçues dans l'étape de réception d'informations de réseau (S03) en se référençant aux informations se rapportant aux réseaux d'itinérance (40, 50) stockées dans la base de données d'informations de réseau d'itinérance (12) sur la base des besoins acquis dans l'étape d'acquisition de besoins (S04) ; et
une étape de transmission d'informations de niveau de priorité (S06) dans laquelle le dispositif de contrôle d'itinérance (10) transmet au terminal de communication mobile (30) des informations concernant le niveau de priorité déterminé dans l'étape de détermination de niveau de priorité (S05), et comprenant en outre :
une étape de détection (S01) dans laquelle le terminal de communication mobile (30) détecte la pluralité de réseaux d'itinérance (40, 50) ;
une étape de transmission d'informations de réseau (S02) dans laquelle le terminal de communication mobile (30) transmet des informations qui spécifient la pluralité de réseaux d'itinérance (40, 50) détectés dans l'étape de détection (S01) contenues dans le signal se rapportant à l'enregistrement d'une position afin d'exécuter une visite d'un réseau d'itinérance aux moyens de fonction d'enregistreur de localisation nominal (11) du dispositif de contrôle d'itinérance (10) ;
une étape de réception d'informations de niveau de priorité (S06) dans laquelle le terminal de communication mobile (30) reçoit des informations concernant le niveau de priorité avec lequel son propre terminal (30) visite la pluralité de réseaux d'itinérance (40, 50), qui sont transmises par le dispositif de contrôle d'itinérance (10) en réponse à la transmission des informations spécifiant la pluralité de réseaux d'itinérance (40, 50) qu'exécute l'étape de transmission d'informations de réseau (S02, S03) ; et
une étape de traitement de visite de réseau (S07) dans laquelle le terminal de communication mobile (30) exécute un traitement pour visiter n'importe lequel de la pluralité de réseaux d'itinérance (40, 50) sur la base des informations concernant le niveau de priorité pour la pluralité de réseaux d'itinérance (40, 50) qui sont reçues dans l'étape de réception d'informations de niveau de priorité (S06).
